(19) Europäisches Patentamt / European Patent Office / Office européen des brevets

(11) **EP 3 639 483 B1**

(12) **FASCICULE DE BREVET EUROPEEN**

(45) Date de publication et mention
de la délivrance du brevet:
**20.04.2022 Bulletin 2022/16**

(21) Numéro de dépôt: **18735661.3**

(22) Date de dépôt: **07.06.2018**

(51) Classification Internationale des Brevets (IPC):
***H04L 12/28*** *(2006.01)*     ***H04L 12/24*** *(2006.01)*

(52) Classification Coopérative des Brevets (CPC):
**H04L 12/2807; H04L 41/084; H04L 41/085**

(86) Numéro de dépôt international:
**PCT/FR2018/051321**

(87) Numéro de publication internationale:
**WO 2018/229398 (20.12.2018 Gazette 2018/51)**

(54) **PROCÉDÉ DE CONFIGURATION D'UNE UNITÉ CENTRALE DE COMMANDE APPARTENANT À UNE INSTALLATION DOMOTIQUE**

VERFAHREN ZUR KONFIGURATION EINER ZENTRALEN STEUEREINHEIT EINES HEIMAUTOMATISIERUNGSSYSTEMS

METHOD FOR CONFIGURING A CENTRAL CONTROL UNIT BELONGING TO A HOME AUTOMATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2017 FR 1755373**

(43) Date de publication de la demande:
**22.04.2020 Bulletin 2020/17**

(73) Titulaire: **Overkiz**
**74370 Metz-Tessi (FR)**

(72) Inventeur: **POGNANT, Sylvain**
**74600 Seynod (FR)**

(74) Mandataire: **Germain Maureau**
**12, rue Boileau**
**69006 Lyon (FR)**

(56) Documents cités:
**US-A1- 2010 257 584     US-A1- 2016 050 116**
**US-A1- 2017 054 615**

## Description

### Domaine de l'invention

La présente invention concerne un procédé de configuration d'au moins une unité centrale de commande ou un dispositif domotique appartenant à une installation domotique.

### Art antérieur

Une installation domotique d'un bâtiment peut comprendre un ou plusieurs dispositifs domotiques. Il est connu de procéder au contrôle, c'est à dire à la commande et/ou à la supervision de ladite installation en utilisant au moins une unité centrale de commande qui communique avec un ou plusieurs dispositifs domotiques. Une telle unité centrale de commande peut être intégrée à un dispositif domotique ou indépendante.

Une unité centrale de commande doit être configurée pour permettre son interaction avec le ou les dispositifs domotiques ou des services fonctionnels à distance, comme par exemple un service utilisateur.

Un grand nombre de configurations différentes peut être envisagée pour une même unité centrale de commande, ce qui implique de mettre en œuvre un procédé de configuration adapté notamment en fonction des dispositifs ou des services à connecter, ou de procéder à une configuration in situ lors de la mise en place de l'unité centrale de commande dans l'installation domotique, cette configuration pouvant se révéler complexe.

Lorsqu'une unité centrale de commande doit être remplacée en raison d'une panne ou pour installer un nouveau modèle, il faut à nouveau configurer cette unité l'adapter à l'installation et permettre son fonctionnement.

La présente invention a pour but de résoudre tout ou partie des inconvénients mentionnés ci-dessus.

La publication US2010257584A décrit un procédé pour configurer une passerelle de mise en réseau domestique utilisée dans un réseau domestique en utilisant des informations de configuration stockées sur un système hôte lorsque des informations de passerelle de mise en réseau sont associées à un compte utilisateur. La passerelle de réseau domestique est configurée automatiquement en réponse à la confirmation par un utilisateur d'un dispositif client.

### Exposé de l'invention

A cet effet, la présente invention concerne un procédé de configuration d'une deuxième unité centrale de commande appartenant à une installation domotique, dans le cadre du remplacement d'une première unité centrale de commande, le procédé étant mis en œuvre par un premier service d'accès à distance de configuration exécuté par une unité de gestion et comprenant les étapes suivantes :

-   Enregistrement d'au moins un ensemble de données ou d'instructions de configuration associé avec un identifiant unique d'une première unité centrale de commande.
-   Réception d'une demande de configuration en lien avec un identifiant d'une deuxième unité centrale de commande ;
-   Détermination d'une association entre la deuxième unité centrale de commande ou son identifiant d'une part et la première unité centrale de commande ou son identifiant d'autre part ;
-   Détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande ;
-   Envoi d'au moins un message de configuration comprenant l'au moins un ensemble de données ou d'instructions de configuration associé à l'identifiant de la deuxième unité centrale de commande à destination de la deuxième unité centrale de commande ;

Grâce aux dispositions selon l'invention, une unité centrale de commande de remplacement peut être configurée en reprenant la configuration de l'unité centrale de commande précédente. Ce remplacement peut intervenir en cas de panne, ou en cas de remplacement par un nouveau modèle d'unité centrale de commande. L'unité centrale de commande de remplacement peut être configurée de façon minimale et générique en usine et lors de sa distribution. Lors de la mise en service de cette unité centrale, la configuration adéquate, correspondant à une configuration dérivée de la configuration de la première unité centrale est obtenue à partir du service de configuration. Ces dispositions permettent par exemple de configurer la communication avec au moins un dispositif domotique présent dans l'installation domotique, la communication avec un service utilisateur particulier pour la commande et/ou la supervision. Elles permettent également de procéder à une adaptation géographique des bandes de fréquence de communication, pour communiquer dans des bandes de fréquence autorisées en fonction de la zone géographique. Il est également possible de procéder à une configuration de l'offre fonctionnelle de l'unité centrale de commande ou du dispositif domotique, ou encore à la configuration de l'interface homme-machine. La configuration peut également comprendre un téléchargement d'un composant logiciel ou d'une partie de composant logiciel à exécuter sur l'unité centrale de commande.

La configuration de l'unité centrale de commande de remplacement est ainsi grandement simplifiée.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :

- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API (pour «*Application Program Interface*» selon la terminologie anglo-saxonne).

Il est également possible que l'unité centrale de commande soit intégrée à un routeur et/ou à un modem réalisant une connexion à un réseau étendu, notamment à Internet.

Au sens de la présente invention, un service de configuration est destiné à identifier la configuration technique correcte pour le dispositif domotique ou l'unité centrale de commande considérée et à communiquer des informations de configuration à l'unité centrale de commande. Ce service peut correspondre à un service d'accès à distance ou à un service utilisateur destiné au contrôle et/ou à la commande et/ou à la supervision de l'installation domotique par un utilisateur ou par une application. Ce service peut être un service informatisé accessible à distance. Ce service peut permettre l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

Par utilisateur, il peut être compris un utilisateur final, un installateur ou encore un opérateur de maintenance.

Selon un aspect de l'invention, l'unité de gestion exécutant le service à distance est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, la ou les unités de gestion exécutant le premier service de configuration peut être une unité centrale destinée à être reliée à une ou plusieurs unités centrales de commande sur des réseaux privés ou locaux distincts, ou encore sur le même réseau local.

La supervision correspond de façon générale à une supervision basée sur le traitement de valeurs des variables d'état d'au moins un dispositif domotique ou une unité centrale de commande.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique ou à une unité centrale de commande en vue de la réalisation d'une action par un dispositif ou de l'obtention en retour d'une information, par exemple d'une information relative à une variable d'état de ce dispositif.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Selon un aspect de l'invention, l'obtention de l'identifiant de localisation est réalisée en collectant cet identifiant dans la mémoire de l'unité centrale de commande. Cet identifiant peut être stocké dans la mémoire lors d'une pré-configuration, par exemple réalisée en usine. Alternativement, cet identifiant pourrait être communiqué par l'utilisateur.

Selon un mode de mise en œuvre, procédé comprend une étape préalable de branchement ou d'initialisation de l'unité centrale de commande.

Ce branchement/initialisation peut être déclenché par une alimentation électrique ou par un ordre provenant dans une étape d'une instruction de l'utilisateur par une action physique sur l'unité centrale de commande tel qu'un appui sur un bouton ou un envoi d'instruction par l'intermédiaire d'un terminal.

Selon un aspect de l'invention, l'envoi de la demande de configuration peut correspondre à une tentative de connexion vers le service de configuration. Cette tentative de connexion identifie l'unité centrale de commande par l'identifiant.

Selon un aspect de l'invention, dans une phase initiale ou préalable au procédé de remplacement, l'unité centrale de commande communique sa configuration sous forme d'au moins un ensemble de données et/ou d'instructions de configuration au service de configuration.

Ces étapes peuvent être réalisées de façon volontaire lors d'une opération de sauvegarde réalisée à la fin de la configuration de l'unité centrale de commande, et/ou de façon périodique avec des mises à jour des données stockées. Il est également possible que ces étapes soient éventuellement initiées avant un remplacement dans le cas d'installation d'une nouveau modèle d'unité centrale de commande.

L'étape de demande de configuration intervient de façon générale après une panne ou une mise hors service de la première unité centrale de commande intervient. La mise hors service peut correspondre à une installation prévue d'un nouveau modèle d'unité centrale de commande.

L'étape de détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande peut être réalisée postérieurement ou partiellement ou totalement antérieurement à l'étape de réception d'une demande de configuration.

Selon un aspect de l'invention, l'étape de détermination d'une association entre la deuxième unité centrale de commande ou de son identifiant d'une part et la première unité centrale de commande ou son identifiant d'autre part comprend une étape de vérification dans un référentiel de configuration afin de déterminer si l'identifiant de la deuxième unité centrale de commande est affecté.

La constatation de l'affectation de l'identifiant de la deuxième unité centrale de commande peut être un pré-requis pour la détermination d'au moins un ensemble de données ou d'instructions de configuration associé à l'identifiant de la deuxième unité centrale de commande. Dans le cas contraire, cela signifie que la demande de configuration ne peut aboutir car la demande de remplacement n'a pas été enregistrée. Il convient donc de déterminer un remplacement valide avant de poursuivre la configuration.

Selon un aspect de l'invention, la demande de configuration provient du deuxième dispositif domotique.

Selon un autre aspect de l'invention, la demande de configuration peut provenir d'un utilisateur. L'utilisateur peut notamment agir par une interface utilisateur ou par l'intermédiaire d'un terminal mobile. Ainsi, l'utilisateur peut se connecter sur le service de configuration et déclencher le remplacement de la première unité centrale de commande par la deuxième unité centrale de commande en fournissant les deux identifiants de la première et de la deuxième unité centrale de commande. Cette étape peut notamment être réalisée suite au branchement et/ou à l'initialisation de la deuxième unité centrale de commande.

Selon un aspect de l'invention, l'au moins un ensemble de données ou d'instructions de configuration associé à l'identifiant de la deuxième unité centrale de commande comprend au moins une donnée ou une instruction de configuration d'au moins une adresse d'émission et/ou de réception de la deuxième unité centrale de commande utilisée pour une interface de communication avec un dispositif domotique de l'installation domotique.

Grâce à ces dispositions, la configuration d'au moins une adresse d'émission permet de communiquer directement en émission avec un dispositif domotique dont l'adresse était connue de la précédente unité centrale de commande et qui est reprise par la nouvelle unité centrale de commande.

Un dispositif domotique qui est rattaché à l'unité centrale de commande, comme par exemple une lampe, et communiquant avec l'unité centrale de commande peut stocker une adresse correspondant à l'ancienne unité centrale de commande afin par exemple de pouvoir envoyer des notifications à l'attention de ladite unité centrale de commande.

Grâce à la configuration de l'adresse de réception de la nouvelle unité centrale de commande qui reprend l'adresse de réception de la précédente unité centrale de commande, une communication directe est permise entre le dispositif et l'unité centrale de commande car la valeur de l'adresse de l'ancienne unité centrale de commande est affectée à la nouvelle unité centrale de commande.

Selon un aspect de l'invention, l'interface de communication est attachée à la communication selon au moins un protocole de communication.

Selon un aspect de l'invention, l'étape de configuration peut comprendre plusieurs étapes de configuration de plusieurs adresses correspondant par exemple à une pluralité d'interfaces de communication utilisant une pluralité de protocoles de communications distincts.

Selon un aspect de l'invention, la ou les valeurs d'adresse font partie de l'au moins un ensemble de données ou d'instructions de configuration en provenance du premier service distant de configuration.

Selon un aspect de l'invention, l'au moins un ensemble de données ou d'instructions de configuration associé à l'identifiant de la deuxième unité centrale de commande comprend au moins une donnée ou une instruction de configuration d'une adresse d'émission et/ou de réception utilisée par une interface de communication d'un dispositif domotique rattaché à l'unité centrale de commande de l'installation domotique.

Grâce à ces dispositions, la configuration d'au moins une adresse d'émission dans le dispositif permet au dispositif domotique de communiquer en émission avec la nouvelle unité centrale de commande.

Un dispositif domotique qui est rattaché à l'unité centrale de commande, comme par exemple une lampe, et communiquant avec l'unité centrale de commande peut stocker une adresse correspondant à l'unité centrale de commande afin par exemple de pouvoir envoyer des notifications à l'attention de ladite unité centrale de commande.

De la même façon, il est possible de modifier une adresse de réception pour autoriser par exemple la nouvelle unité centrale de commande à envoyer des commandes au dispositif domotique.

Selon un aspect de l'invention, le procédé comprend en outre les étapes suivantes :

- Réception d'une demande de remplacement en relation avec un identifiant de la première unité centrale de commande et une identifiant de la deuxième unité centrale de commande;
- Enregistrement dans un référentiel de configuration d'une association entre la première unité centrale de commande ou son identifiant d'une part et la deuxième unité centrale de commande ou son identifiant d'autre part ;

Selon un aspect de l'invention la demande de remplacement provient d'un utilisateur, par exemple par l'intermédiaire d'un terminal utilisateur.

Dans le cas du remplacement par un nouveau modèle d'unité centrale de commande, la demande de remplacement peut intervenir avant la mise hors service.

Selon un aspect de l'invention, l'identifiant unique d'une unité centrale de commande peut par exemple comprendre une adresse MAC ou un numéro de série. Cet identifiant peut se présenter sous la forme d'un code QR (ou QR-Code pour «Quick Reponse Code" selon la terminologie anglo-saxonne) ou autre code barre lisible de façon optique sur l'unité centrale de commande ou le dispositif ou leur conditionnement, ou encore sous forme d'une étiquette d'identification radiofréquence (ou RFID pour *«Radio Frequency Identification»* selon la terminologie anglo saxonne), une étiquette de communication en champ proche (ou NFC pour *«Near Field Communication»* selon la terminologie anglo-saxonne) ou toute autre étiquette lisible par un dispositif à disposition de l'utilisateur, comme par exemple un terminal de communication mobile.

Selon un aspect de l'invention, l'étape de détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande comprend une copie au moins partielle de l'au moins un ensemble de données ou d'instructions de configuration associé à l'identifiant de la première unité centrale de commande.

Selon un aspect de l'invention, l'étape de détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande comprend une modification de format des données ou instructions de configuration ou une modification d'une structure des données ou instructions de configuration.

Grâce à ces dispositions, il est possible notamment de remplacer une première unité centrale de commande par une seconde unité centrale de commande d'un type différent de la première unité centrale de commande, par exemple dans le cas d'une mise à niveau ou de l'utilisation d'un système matériel différent.

A titre d'exemple, un changement de la structure du modèle de représentation d'information calendaire peut être pris en compte : selon un premier modèle, un événement est représenté avec une récurrence hebdomadaire. Selon un deuxième modèle, un événement peut être représenté avec une récurrence exprimée en fonction de paramètres complémentaire, comme le quantième du mois ou le numéro de la semaine dans un mois. Le second modèle plus perfectionné peut exprimer l'événement exprimé selon le premier modèle, après une modification de structure. Fonctionnellement, le résultat est le même.

Les nouvelles fonctionnalités offertes par le deuxième modèle peuvent être configurées par défaut.

Selon un aspect de l'invention, l'étape de détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande comprend une adaptation des données ou instructions de configuration.

Selon un aspect de l'invention, l'adaptation de l'au moins un ensemble de données ou d'instructions de configuration concerne une adresse d'émission ou de réception ou un identifiant unique qui devrait être remplacé dans l'au moins un ensemble de données ou d'instructions de configuration.

Selon un aspect de l'invention, l'étape de détermination d'au moins un ensemble de données ou d'instructions de configuration associé à l'identifiant de la deuxième unité centrale de commande à partir de l'au moins un ensemble de données ou d'instructions de configuration associé à l'identifiant unique de la première unité centrale de commande peut être réalisée antérieurement à l'étape de demande de configuration, après la demande de remplacement. Alternativement, ladite étape de détermination peut être réalisée postérieurement à la demande de remplacement.

Selon un aspect de l'invention, le procédé comprend en outre l'étape suivante :

- Enregistrement de l'au moins un ensemble de données ou d'instructions de configuration associé à l'identifiant de la deuxième unité centrale de commande dans le référentiel de configuration ;

Selon un aspect de l'invention, le procédé comprend en outre l'étape suivante :

- Mise à jour du référentiel de configuration de façon à enregistrer le remplacement effectif de la première unité centrale de commande par la deuxième unité centrale de commande.

Selon un aspect de l'invention, le procédé comprend une étape consistant à supprimer ou invalider l'enregistrement correspondant à l'ancienne unité centrale de commande dans le référentiel de configuration ;

Selon un aspect de l'invention, la mise à jour comprend des étapes de mise à jour des éléments qui se référaient à la première unité centrale de commande pour remplacer ladite référence par une référence à la deuxième unité centrale de commande.

En particulier, la mise à jour peut comprendre une mise à jour d'un référentiel des installations; et/ou une mise à jour d'un référentiel des dispositifs domotiques et/ou une mise à jour d'un référentiel des scénarios.

Selon un aspect de l'invention, le procédé comprend en outre l'étape suivante :

- Vérification de la disponibilité de l'identifiant unique de la deuxième unité centrale de commande auprès du référentiel de configuration ;

L'étape de vérification étant préalable à l'enregistrement de la demande de remplacement.

La constatation de la disponibilité de l'identifiant peut être un pré-requis pour l'enregistrement de la demande de remplacement. Si la disponibilité de l'identifiant unique auprès du référentiel de configuration n'est pas constatée, cela signifie que la demande d'inscription ne peut aboutir car la deuxième unité centrale de commande est déjà associée à une configuration et/ou à une installation. Il convient donc de résoudre un conflit concernant cet identifiant.

Selon un aspect de l'invention, le procédé comprend en outre une étape de vérification de l'existence et des droits de l'utilisateur correspondant à l'identifiant auprès d'un référentiel utilisateur.

La constatation de la validité du compte utilisateur est un pré-requis pour la configuration ou le remplacement de l'unité centrale de commande. Dans le cas contraire, cela signifie que la demande d'inscription ne peut aboutir car le compte utilisateur associé sur le service n'est pas valide ou n'existe pas. Il convient donc de déterminer un compte utilisateur valide sur ce service avant de poursuivre le remplacement.

La présente invention concerne également un procédé de configuration d'une unité centrale de commande appartenant à une installation domotique ou d'un dispositif domotique comprenant une unité centrale de commande et appartenant à une installation domotique, dans le cadre du remplacement d'une précédente unité centrale de commande, le procédé étant mis en œuvre par l'unité centrale de commande et comprenant les étapes suivantes :

- Obtention d'un identifiant de localisation d'un service de configuration ;
- Envoi d'une demande de configuration à destination du service de configuration en utilisant l'identifiant de localisation et en lien avec un identifiant de l'unité centrale de commande ;
- Réception d'au moins un ensemble de données ou d'instructions de configuration en provenance du premier service distant de configuration dérivé de la configuration de la précédente unité centrale de commande ;
- Configuration de l'unité centrale de commande sur la base de l'au moins un ensemble de données ou d'instructions de configuration ;

Selon un aspect de l'invention, l'étape de configuration comprend une configuration d'au moins une adresse d'émission et/ou de réception de l'unité centrale de commande utilisée pour une interface de communication avec un dispositif domotique de l'installation domotique, la configuration étant réalisée sur la base d'au moins une valeur d'adresse d'émission et/ou de réception comprise dans l'au moins un ensemble de données ou d'instructions de configuration.

Selon un aspect de l'invention, l'étape de configuration comprend l'envoi d'un message de commande à destination d'au moins un dispositif domotique en vue de la modification d'une adresse d'émission et/ou de réception utilisée par une interface de communication du dispositif domotique avec l'unité centrale de commande de l'installation domotique, sur la base d'au moins une valeur d'adresse d'émission et/ou de réception comprise dans l'au moins un ensemble de données ou d'instructions de configuration.

Les différents aspects définis ci-dessus non incompatibles peuvent être combinés.

### **Brève** description des figures

L'invention sera mieux comprise à l'aide de la description détaillée qui est exposée ci-dessous en regard des dessins annexés sur lesquels :

La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'une pluralité de serveurs destinés à être connecté aux installations domotiques ;
La figure 3 est un schéma illustrant un mode de mise en œuvre d'un procédé de configuration.
La figure 4 illustre des détails de configuration des interfaces de communication d'une unité centrale de commande et d'un dispositif domotique.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### **Description d'un système comprenant une installation domotique**

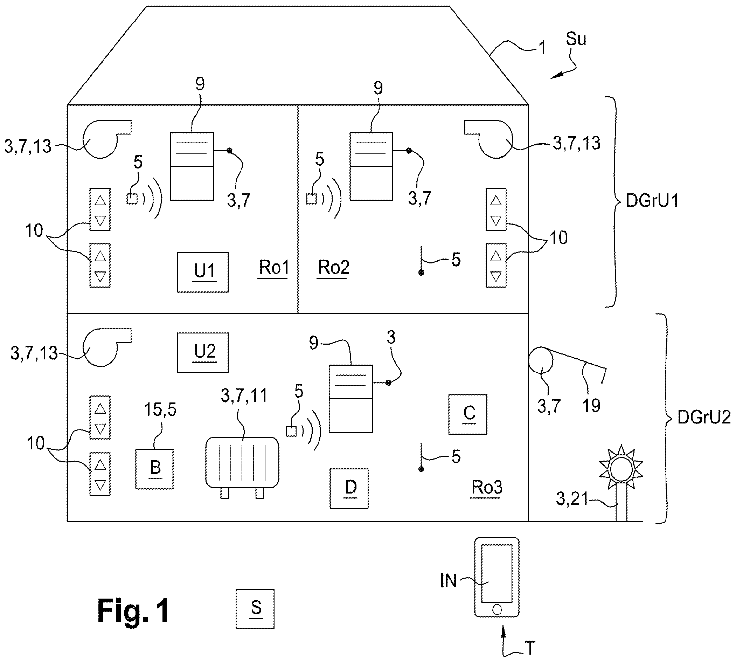

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande UI, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande UI, U2 est agencée pour regrouper l'ensemble des données en provenance des dispositifs D de son groupe DGrU1, DGrU2 et pour traiter ces données.

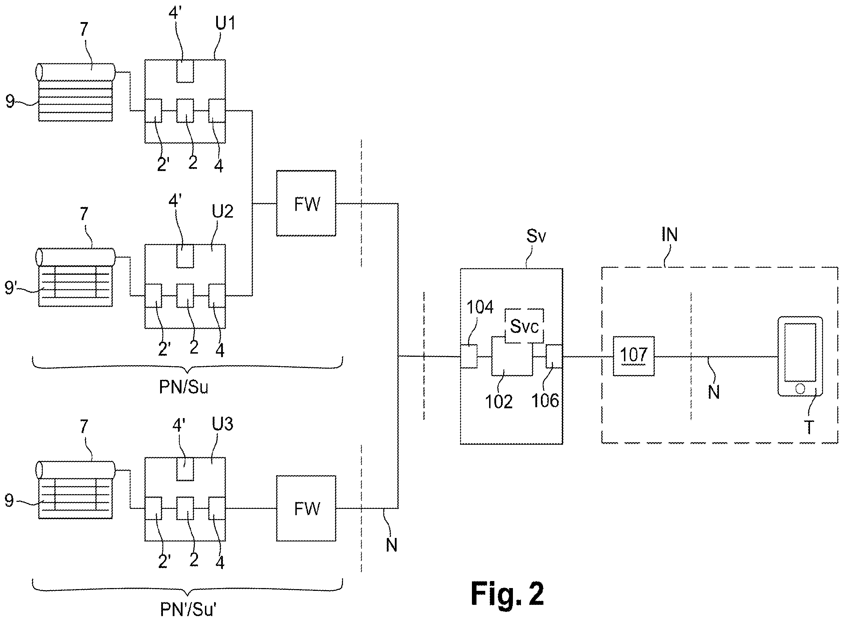

Comme cela est représenté sur la figure 2, chaque unité centrale de commande U est agencée pour communiquer avec un ou plusieurs serveurs distants Sv.

Les unités centrales de commande UI, U2, U3 sont disposées sur un réseau privé PN, PN', dont l'accès est en général protégé par un pare-feu FW. En particulier, dans l'exemple représenté sur la figure 2, deux unités centrales de commandes UI, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le réseau privé PN est relié à un réseau étendu N, par exemple Internet. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon au moins un protocole de communication local.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Lorsque l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon autre protocole de communication que le premier protocole local. Le deuxième protocole de communication peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole. D'autres exemples incluent Bluetooth, Zigbee ou Wifi.

Le terminal de communication T peut contenir et exécuter un logiciel d'application APP.

Chaque unité centrale de commande U comprend, en outre, un module de communication 4 avec des serveurs distants Sv1i, Sv1c, Sv2.

Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service distant de configuration Svc.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T1 communiquant par le réseau étendu N. Le terminal de communication mobile T1 peut être, par exemple, un téléphone intelligent ou une tablette. Le terminal de communication mobile T1 peut être le même ou un terminal du même type que celui avec lequel l'unité centrale de commande U communique en local au moyen du module de communication 4', ou un terminal différent. Nous désignerons indifféremment ces terminaux mobiles par la référence T1. Alternativement, l'utilisateur final pourrait également faire usage d'un terminal fixe.

L'interface de commande et/ou de contrôle IN comprend un processeur qui peut être disposé au niveau du serveur web 107 et/ou du terminal de communication mobile T1.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

## Identifiant unique d'un dispositif domotique

Le serveur Sv, le service de configuration Svc ainsi que les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :

- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :

protocol : identifiant du protocole local de dispositif natif;
gatewayId : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemId : ce champ optionnel indique une identification, par exemple un rang du sous-système (démarrant par exemple à 1), si un tel sous-système est présent.

*Exemples*

1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

## Service de configuration

Le service de configuration Svc est destiné à identifier la configuration technique correcte pour le dispositif domotique ou l'unité centrale de commande considérée et à communiquer des données et/ou instructions de configuration à l'unité centrale de commande U.

Ce service peut être un service informatisé accessible à distance, qui permet l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

## Référentiel de configuration

Le service de configuration Svc met en œuvre un référentiel de configuration Rf. Le référentiel de configuration Rf stocke la correspondance entre un identifiant d'une unité centrale de commande UID et des données de configuration relatives à cette unité centrale de commande Cfg. Par ailleurs, ce référentiel peut contenir un lien Lk entre une première unité centrale de commande et une deuxième unité centrale de commande destinée à remplacer la première. Une valeur spécifique d'initialisation FI peut également être associée à une unité centrale de commande UI' pour indiquer que cette unité centrale de commande UI' doit être configurée.

Le tableau 1 ci-dessous donne un exemple d'une première structure de donnée du référentiel Rf.

*Tableau 1: Exemple de deuxième structure de donnée du référentiel Rf*

| Identifiant d'unité centrale de commande UID | Lien Lk | Initialisation FI | Configuration cfg |
|---|---|---|---|
| U1ID | - | N | Cfg |
| U1'ID | U1ID | Y | Cfg' |

A titre d'exemple, le référentiel peut être constitué par une base de données ou un service de répertoire. Ce référentiel peut être compris dans le premier service de configuration Svc1 ou externe et accessible par le premier service de configuration Svc1.

## Procédé de configuration

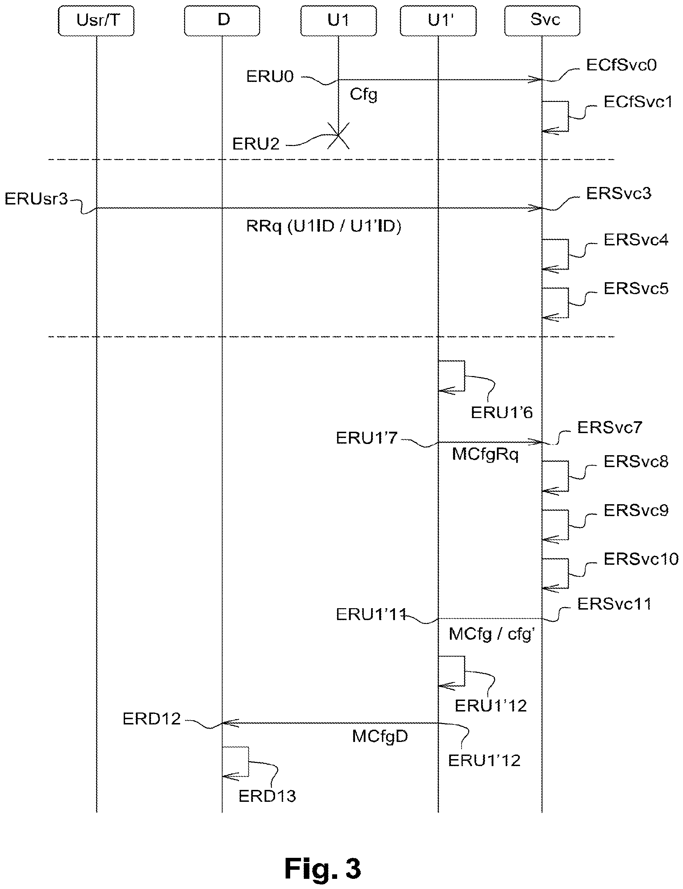

Nous allons à présent décrire un procédé de configuration dans le cadre du remplacement d'une unité centrale de commande U1 appartenant à une installation domotique Su en référence à la figure 3.

Dans une phase préalable au procédé de remplacement correspondant à une étape ERU0 sur la figure 3, l'unité centrale de commande U1 communique sa configuration cfg sous forme d'au moins un ensemble de données et/ou d'instructions de configuration au service de configuration Svc qui reçoit cet au moins un ensemble dans une étape ERSvc0. Dans une étape ERSvc1, le service de configuration Svc stocke ladite configuration dans un référentiel de configuration Rf, en lien avec un identifiant unique d'unité centrale de commande.

Ces étapes peuvent être réalisées de façon volontaire lors d'une opération de sauvegarde réalisée à la fin de la configuration de l'unité centrale de commande UI, et/ou de façon périodique avec des mises à jour des données stockées. Il est également possible que ces étapes soient éventuellement initiées avant un remplacement dans le cas d'installation d'une nouvelle version matérielle (upgrade).

Nous supposerons, comme indiqué sur la figure 3 à l'étape ERU2 qu'une panne ou une mise hors service de l'unité centrale de commande U1 intervient. La mise hors service peut correspondre à une installation prévue d'un nouveau modèle d'unité centrale de commande UI'.

L'utilisateur Usr procède ensuite à un remplacement de l'unité centrale U1 par une nouvelle unité centrale UI'. Par la suite, l'unité centrale de commande U1 à remplacer sera nommée "ancienne unité centrale de commande" ou "première unité centrale de commande". L'unité centrale de commande UI' de remplacement sera nommée « nouvelle unité centrale de commande » ou « deuxième unité centrale de commande ».

La nouvelle unité centrale de commande UI' contient au moins un identifiant de localisation SvcL correspondant à une information relative à l'adresse du service de configuration Svc. Cet identifiant peut être stocké dans la mémoire lors d'une pré-configuration, par exemple réalisée en usine. Alternativement, cet identifiant pourrait être communiqué par l'utilisateur.

Dans une étape ERUsr3, l'utilisateur émet, par exemple par l'intermédiaire d'un terminal utilisateur T, une demande de remplacement RRq à destination du service distant de configuration Svc qui la reçoit dans une étape ERSvc3. Cette demande contient l'identifiant U1ID de l'ancienne unité centrale de commande U1 et l'identifiant U1'ID de la nouvelle unité centrale de commande U1'. Dans le cas du remplacement par un nouveau modèle d'unité centrale de commande, la demande de remplacement peut intervenir avant la mise hors service.

Dans une étape ERSvc4, le service de configuration Svc procède à une vérification auprès du référentiel de configuration Rf afin d'identifier si l'identifiant U1'ID de la nouvelle unité centrale de commande Ul' est disponible dans le référentiel. Nous supposerons dans ce cas que la disponibilité de l'identifiant U1'ID a été constatée. Dans le cas contraire, cela signifie que la demande d'inscription ne peut aboutir car la nouvelle unité centrale de commande Ul' est déjà associée à une configuration et à une installation. Il convient donc de résoudre un conflit concernant cet identifiant.

A ce stade, le procédé peut comprendre en outre une étape de vérification de l'existence et des droits de l'utilisateur correspondant à l'identifiant de la nouvelle unité centrale de commande Ul' auprès d'un référentiel utilisateur.

La constatation de la validité du compte utilisateur est un pré-requis pour la configuration ou le remplacement de l'unité centrale de commande U1. Dans le cas contraire, cela signifie que la demande d'inscription ne peut aboutir car le compte utilisateur associé sur le service n'est pas valide ou n'existe pas. Il convient donc de déterminer un compte utilisateur valide sur ce service avant de poursuivre le remplacement.

Dans une étape ERSvc5 le service procède à un enregistrement ERSvc5 dans le référentiel de configuration Rf de l'identifiant de la nouvelle unité centrale de commande Ul', en lien Lk avec l'ancienne unité centrale de commande Ul, afin de définir l'association entre l'ancienne unité centrale de commande U1 ou son identifiant U1ID d'une part et la nouvelle unité centrale de commande U1' ou son identifiant U1'ID d'autre part. Une valeur spécifique d'initialisation FI peut également être associée à la nouvelle unité centrale de commande Ul' pour indiquer que cette nouvelle unité centrale de commande Ul' doit être configurée.

A ce stade, dans l'étape ERSvc5, le service de configuration Svc peut déterminer tout ou partie d'au moins un ensemble de données ou d'instructions de configuration cfg' associé à l'identifiant de la nouvelle unité centrale de commande Ul' en vue de stocker cet ensemble dans le référentiel de configuration Rf. Les étapes de détermination sont détaillées ultérieurement en référence à l'étape ERSvc10.

Par la suite, il est procédé à un branchement et/ou à une initialisation de la nouvelle unité centrale de commande Ul'. Ce branchement/initialisation peut être déclenché par une alimentation électrique ou par un ordre provenant d'une instruction de l'utilisateur par une action physique sur la nouvelle unité centrale de commande Ul' tel qu'un appui sur un bouton ou un envoi d'instruction par l'intermédiaire d'un terminal T.

Dans le cadre de ce branchement ou suite à cette initialisation, la nouvelle unité centrale de commande Ul' obtient, dans une étape ERU1'6, l'identifiant de localisation SvcL du service de configuration qui peut correspondre à une URL, cet identifiant ayant été stocké préalablement dans la mémoire de la nouvelle unité centrale de commande Ul'.

Dans une étape ERU1'7, la nouvelle unité centrale de commande Ul' envoie une demande de configuration MCfgRq qui est reçue par le service de configuration Svc dans une étape ERSvc7. Cette demande de configuration MCfgRq identifie la nouvelle unité centrale de commande Ul' par l'identifiant U1'ID. Cette demande de configuration peut correspondre à une simple tentative de connexion. Bien entendu, plusieurs étapes successives peuvent être réalisées correspondant à l'établissement d'une communication, puis à la demande de configuration.

Suivant un autre mode de mise en œuvre, la demande de configuration peut provenir de l'utilisateur via un terminal T. Suite au branchement/initialisation de la nouvelle unité centrale de commande Ul', l'utilisateur peut se connecter sur le service de configuration Svc et déclencher le remplacement de l'ancienne unité centrale de commande U1 par la nouvelle unité centrale de commande Ul' en fournissant les deux identifiants U1ID, U1'ID de l'ancienne et de la nouvelle unité centrale de commande.

A réception de cette demande de configuration, le service de configuration Svc procède à une vérification dans une étape ERSvc8 dans le référentiel de configuration Rf afin de déterminer si l'identifiant U1'ID de la nouvelle unité centrale de commande est bien affecté, et quelles sont les données associées.

Suite à cette vérification, une ou plusieurs étapes de configuration sont réalisées par le service de configuration Svc représentées collectivement sur la figure 3 par l'étape ERSvc9. En particulier, ces étapes consistent à supprimer ou invalider l'enregistrement correspondant à l'ancienne unité centrale de commande U1 ;

Ces étapes comprennent également les étapes consistant à mettre à jour les éléments qui se référaient à l'ancienne unité centrale de commande U1 pour remplacer par une référence à la nouvelle unité centrale de commande Ul' :

a) Eventuellement mettre à jour un référentiel des installations Su, de façon à remplacer les références à l'ancienne unité centrale de commande U1 par des références à la nouvelle unité centrale de commande Ul' ;

b) Mettre à jour un référentiel des dispositifs domotiques D ; en particulier DURL;

c) Mettre à jour un référentiel des scénarios de commande ;

La valeur spécifique d'initialisation FI associée à la nouvelle unité centrale de commande UI' peut être mise à jour pour indiquer que cette nouvelle unité centrale de commande UI' est configurée.

Dans une étape ERSvc10, le service de configuration Svc procède à la détermination et/ou à la collecte de l'au moins un ensemble de données ou d'instructions de configuration cfg' associé à l'identifiant de l'ancienne unité centrale de commande U1' à partir notamment de l'au moins un ensemble de données ou d'instructions de configuration cfg associé à l'identifiant de l'ancienne unité centrale de commande U1 et compris dans le référentiel de configuration.

Cette étape de détermination peut comprendre une copie partielle ou complète de l'au moins un ensemble de données ou d'instructions de configuration cfg associé à l'identifiant de l'ancienne unité centrale de commande U1.

Cette étape peut éventuellement comprendre une étape de conversion de la configuration cfg si la nouvelle unité centrale de commande UI' n'est pas du même type que l'ancienne unité centrale de commande UI, par exemple dans le cas d'une mise à niveau ou de l'utilisation d'un système matériel différent. Il est également possible de procéder à des adaptations de la configuration, par exemple lorsqu'une adresse ou un identifiant unique devrait être remplacé dans la configuration cfg. A titre d'exemple, cette situation peut correspondre à une partie de configuration concernant une clef électronique (également connue sous le terme anglo-saxon « dongle ») connectée à la nouvelle unité centrale de commande UI'.

Tout ou partie des étapes de détermination peuvent être réalisée précédemment lors de l'étape ERSvc5, l'étape ERSvc10 pouvant se limiter à une collecte de l'ensemble cfg' disponible dans le référentiel de configuration Rf.

Le service de configuration Svc peut ensuite envoyer un ou plusieurs messages de configuration MCfg dans une étape ERSvc11 qui sont reçus par la nouvelle unité centrale de commande UI' dans une étape ERU1'11.

Dans une étape ERU1'12, la nouvelle unité centrale de commande UI' procède à sa configuration sur la base des informations reçues du service dans le message MCfg.

En particulier, cette configuration concerne la modification des adresses d'émission et de réception de la nouvelle unité centrale de commande UI'.

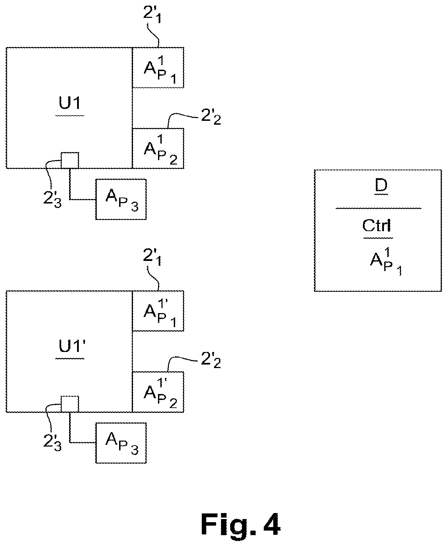

Comme cela est illustré sur la figure 4, l'ancienne unité centrale de commande U1 présente par exemple deux interfaces de communication $2'_1$ et $2'_2$ destinées à la communication respectivement selon un premier protocole $P_1$ et selon un deuxième protocole local $P_2$. L'ancienne unité centrale de commande U1 est identifiée par une adresse $A^1_{P_1}$ selon le premier protocole et respectivement par une adresse $A^1_{P_2}$ selon le deuxième protocole.

Nous supposerons que la nouvelle unité centrale de commande UI' comprend les mêmes interfaces de communications $2'_1$ et $2'_2$ destinées à la communication respectivement selon un premier protocole $P_1$ et selon un deuxième protocole local $P_2$. L'ancienne unité centrale de commande U1 est identifiée par une adresse $A^{1'}_{P_1}$ selon le premier protocole et respectivement par une adresse $A^{1'}_{P_2}$ selon le deuxième protocole.

Un dispositif domotique D qui est rattaché à l'ancienne unité centrale de commande U1, comme par exemple une lampe, et communiquant avec l'ancienne unité centrale de commande U1 peut avoir stocké dans une liste de contrôleurs l'adresse $A^1_{P_1}$, afin par exemple de pouvoir envoyer des notifications à l'attention de l'ancienne unité centrale de commande U1.

Dans cette configuration, lors de l'étape de configuration ERU1'12, afin de permettre une communication directe entre le dispositif D et la nouvelle unité centrale de commande U1', la valeur de l'adresse $A^1_{P_1}$ est affectée à l'adresse $A^{1'}_{P_1}$. Cette valeur d'adresse fait partie de la configuration cfg stockée dans le référentiel Rf par le service de configuration Svc, et est communiquée dans les messages de configuration Mcfg.

Selon une deuxième possibilité, dans la mesure où le dispositif D offre une interface permettant une telle mise à jour, il est possible pour la nouvelle unité centrale de commande U1 d'envoyer un message de configuration MCfgD au dispositif D dans une étape ERU1'12, ce message comprenant une instruction de modification dans la liste de contrôleurs Ctrl de l'adresse $A^1_{P_1}$ en une adresse $A^{1'}_{P_1}$. Le dispositif domotique D reçoit ce message de configuration MCfgD dans une étape ERD12, et effectue la configuration correspondante dans une étape ERD13.

La figure 4 illustre une possibilité additionnelle dans laquelle une interface de communication $2'_3$ est réalisée par un dongle ou autre élément matériel connecté sur un port de la nouvelle unité centrale de commande, par exemple un port USB.

La nouvelle unité centrale de commande Ul' peut procéder dans l'étape ERU1'12 à la configuration de périphériques amovibles si le périphérique amovible possède une mémoire permettant de stocker de façon persistante des données de configuration et s'il permet une configuration automatique par la nouvelle unité centrale de commande Ul'. Il convient de vérifier si le périphérique amovible est un nouveau périphérique ou un périphérique rattaché précédemment sur l'ancienne unité centrale de commande qui a été remplacée. Pour réaliser cette vérification, il est possible de procéder à une vérification d'adresse ou de numéro de série ou vérification des produits connectés et de comparer ces éléments avec les enregistrements stockés sur l'unité de gestion, si les informations de configuration du périphérique ont été conservées et stockées sur le serveur, comme les données de configuration de l'ancienne unité centrale de commande U.

A titre d'exemple, le périphérique amovible peut être un composant ou une clé électronique de communication selon le protocole Zwave. Dans le cadre d'une communication en réseau Mesh, la clé électronique peut se charger de la gestion des routes (Zwave). Il est possible dans ce cas de conserver la clé électronique lors du changement d'unité centrale de commande pour conserver la configuration, ou de répliquer les données sur une nouvelle clé électronique si la configuration correspondante a été stockée sur l'unité de gestion .

## Revendications

1. Procédé de configuration d'une deuxième unité centrale de commande (U1') appartenant à une installation domotique (Su), dans le cadre du remplacement d'une première unité centrale de commande (U1), le procédé étant mis en œuvre par un premier service d'accès à distance de configuration (Svclc) exécuté par une unité de gestion (Sv1) et comprenant les étapes suivantes :

   - Enregistrement (ERSvc1) d'au moins un ensemble de données ou d'instructions de configuration (cfg) associé avec un identifiant unique d'une première unité centrale de commande (U1).
   - Réception (ERSvc7) d'une demande de configuration (MCfgRq) en lien avec un identifiant d'une deuxième unité centrale de commande (U1') ;
   - Détermination (ERScv8) d'une association entre la deuxième unité centrale de commande (U1') ou son identifiant (U1'ID) d'une part et la première unité centrale de commande (U1) ou son identifiant (U1ID) d'autre part ;
   - Détermination (ERSvc10, ERSvc5) d'au moins un ensemble de données ou d'instructions de configuration (cfg') associé à l'identifiant de la deuxième unité centrale de commande (U1') à partir de l'au moins un ensemble de données ou d'instructions de configuration (cfg) associé à l'identifiant unique de la première unité centrale de commande (U1) ;
   - Envoi (ERSvc11) d'au moins un message de configuration (MCfg) comprenant l'au moins un ensemble de données ou d'instructions de configuration (cfg') associé à l'identifiant de la deuxième unité centrale de commande (U1') à destination de la deuxième unité centrale de commande (U1') ;

2. Procédé selon la revendication 1, dans lequel l'au moins un ensemble de données ou d'instructions de configuration (cfg') associé à l'identifiant de la deuxième unité centrale de commande (U) comprend au moins une donnée ou une instruction de configuration d'au moins une adresse $(A_{P_1}^{1'}, A_{P_2}^{1'})$ d'émission et/ou de réception de la deuxième unité centrale de commande (U1') utilisée pour une interface de communication (2') avec un dispositif domotique (D) de l'installation domotique (Su).

3. Procédé selon l'une des revendications 1 ou 2, dans lequel l'au moins un ensemble de données ou d'instructions de configuration (cfg') associé à l'identifiant de la deuxième unité centrale de commande (U) comprend au moins une donnée ou une instruction de configuration d'une adresse d'émission et/ou de réception utilisée par une interface de communication d'un dispositif domotique (D) rattaché à l'unité centrale de commande (U1') de l'installation domotique (Su).

4. Procédé selon l'une des revendications 1 à 3, comprenant en outre les étapes suivantes :

   - Réception d'une demande de remplacement (ERSvc3) en relation avec un identifiant (U1ID) de la première unité centrale de commande (U1) et une identifiant (U1'ID) de la deuxième unité centrale de commande (U1');
   - Enregistrement (ERSvc5) dans un référentiel de configuration (Rf) d'une association entre la première unité centrale de commande (U1) ou son identifiant (U1ID) d'une part et la deuxième unité centrale de commande (U1') ou son identifiant (U1'ID) d'autre part ;

**5.** Procédé selon l'une des revendications 1 à 4, dans lequel l'étape de détermination (ERSvc10) d'au moins un ensemble de données ou d'instructions de configuration (cfg') associé à l'identifiant (U1'ID) de la deuxième unité centrale de commande (U) à partir de l'au moins un ensemble de données ou d'instructions de configuration (cfg) associé à l'identifiant unique (U1ID) de la première unité centrale de commande (U1) comprend une copie au moins partielle de l'au moins un ensemble de données ou d'instructions de configuration associé à l'identifiant de la première unité centrale de commande (cfg).

**6.** Procédé selon l'une des revendications 1 à 5, dans lequel l'étape de détermination (ERSvc10) d'au moins un ensemble de données ou d'instructions de configuration (cfg') associé à l'identifiant (U1'ID) de la deuxième unité centrale de commande (U) à partir de l'au moins un ensemble de données ou d'instructions de configuration (cfg) associé à l'identifiant unique de la première unité centrale de commande (U1) comprend une modification de format des données ou instructions de configuration (cfg) ou une modification d'une structure des données ou instructions de configuration (cfg) .

**7.** Procédé selon l'une des revendications 1 à 6, dans lequel l'étape de détermination (ERSvc10) d'au moins un ensemble de données ou d'instructions de configuration (cfg') associé à l'identifiant (U1'ID) de la deuxième unité centrale de commande (U) à partir de l'au moins un ensemble de données ou d'instructions de configuration (cfg) associé à l'identifiant unique (U1ID) de la première unité centrale de commande (U1) comprend une adaptation des données ou instructions de configuration (cfg).

**8.** Procédé selon l'une des revendications 4 à 7, comprenant en outre l'étape suivante :

- Enregistrement (ERSvc9) de l'au moins un ensemble de données ou d'instructions de configuration (cfg) associé à l'identifiant (U1'ID) de la deuxième unité centrale de commande (U1') dans le référentiel de configuration (Rf) ;

**9.** Procédé selon la revendication 8, comprenant en outre l'étape suivante :

- Mise à jour (ERSvc9) du référentiel de configuration de façon à enregistrer le remplacement effectif de la première unité centrale de commande (U1) par la deuxième unité centrale de commande (U1').

**10.** Procédé selon la revendication 4, comprenant en outre les étapes suivantes :

- Vérification (ERSvc4) de la disponibilité de l'identifiant unique (U1'ID) de la deuxième unité centrale de commande (U1') auprès du référentiel de configuration (Rf) ;

L'étape de vérification étant préalable à l'enregistrement de la demande de remplacement.

**11.** Procédé de configuration d'une unité centrale de commande (U1) appartenant à une installation domotique (Su) ou d'un dispositif domotique (D) comprenant une unité centrale de commande (U1) et appartenant à une installation domotique (Su), dans le cadre du remplacement d'une précédente unité centrale de commande (U1), le procédé étant mis en œuvre par l'unité centrale de commande (U1') et comprenant les étapes suivantes :

- Obtention (ERU1'6) d'un identifiant de localisation (SvcL) d'un service de configuration (Svc) ;
- Envoi (ERU1'7) d'une demande de configuration (MConn) à destination du service de configuration (Svc) en utilisant l'identifiant de localisation (Svc1) et en lien avec un identifiant de l'unité centrale de commande (U) ;
- Réception (ERU1'11) d'au moins un ensemble de données ou d'instructions de configuration (cfg') en provenance du premier service distant de configuration (Svc) dérivé de la configuration de la précédente unité centrale de commande (U1) ;
- Configuration (ECfUl'12) de l'unité centrale de commande (U1') sur la base de l'au moins un ensemble de données ou d'instructions de configuration (cfg') ;

**12.** Procédé selon la revendication 11, dans lequel l'étape de configuration comprend une configuration d'au moins une adresse $(A^{1'}_{P_1},\ A^{1'}_{P_2})$ d'émission et/ou de réception de l'unité centrale de commande (U1') utilisée pour une interface de communication (2') avec un dispositif domotique (D) de l'installation domotique (Su), la configuration étant réalisée sur la base d'au moins une valeur d'adresse d'émission et/ou de réception comprise dans l'au moins un ensemble de données ou d'instructions de configuration (cfg').

13. Procédé selon l'une des revendications 11 ou 12, dans lequel l'étape de configuration comprend l'envoi d'un message de commande (MCfgD) à destination d'au moins un dispositif domotique (D) en vue de la modification d'une adresse d'émission et/ou de réception utilisée par une interface de communication du dispositif domotique (D) avec l'unité centrale de commande (U1') de l'installation domotique (Su), sur la base d'au moins une valeur d'adresse d'émission et/ou de réception comprise dans l'au moins un ensemble de données ou d'instructions de configuration (cfg').

**Patentansprüche**

1. Verfahren zur Konfiguration einer zweiten zentralen Steuereinheit (U1'), die einer Heimautomatisierungsanlage (Su) angehört, im Rahmen des Tausches einer ersten zentralen Steuereinheit (U1), wobei das Verfahren durch einen ersten Fernkonfigurationszugriffsdienst (Svc1c) umgesetzt wird, der durch eine Verwaltungseinheit (Sv1) ausgeführt wird, und die folgenden Schritte umfassend:

   - Speichern (ERSvc1) mindestens Reihe von Konfigurationsdaten oder - anweisungen (cfg), die einer eindeutigen Kennung einer ersten zentralen Steuereinheit (U1) zugewiesen ist.
   - Empfangen (ERSvc7) einer Konfigurationsanfrage (MCfgRq) in Verbindung mit einer Kennung einer zweiten zentralen Steuereinheit (U1');
   - Bestimmen (ERScv8) einer Zuweisung zwischen der zweiten zentralen Steuereinheit (U1') oder deren Kennung (U1'ID) einerseits, und der ersten zentralen Steuereinheit (U1) oder deren Kennung (U1ID) andererseits;
   - Bestimmen (ERSvc10, ERSvc5) mindestens einer Reihe von Konfigurationsdaten oder -anweisungen (cfg'), die der Kennung der zweiten zentralen Steuereinheit (U1') zugewiesen ist, aus mindestens einer Reihe von Konfigurationsdaten oder -anweisungen (cfg), die der eindeutigen Kennung der ersten zentralen Steuereinheit (U1) zugewiesen ist;
   - Senden (ERSvc11) mindestens einer Konfigurationsnachricht (MCfg), die mindestens eine Reihe von Konfigurationsdaten oder -anweisungen (cfg') umfasst, die der Kennung der zweiten zentralen Steuereinheit (U1') zugewiesen ist, an die zweite zentrale Steuereinheit (U1');

2. Verfahren nach Anspruch 1, wobei die mindestens eine Reihe von Konfigurationsdaten oder -anweisungen (cfg'), die der Kennung der zweiten zentralen Steuereinheit (U) zugewiesen ist, mindestens ein Konfigurationsdatum oder - anweisung mindestens einer Adresse $(A_{P_1}^{1'}, A_{P_2}^{1'})$ zum Senden und/oder Empfangen der zweiten zentralen Steuereinheit (U1') umfasst, die für eine Kommunikationsschnittstelle (2') mit einer Heimautomatisierungsvorrichtung (D) der Heimautomatisierungsanlage (Su) verwendet wird.

3. Verfahren nach einem der Ansprüche 1 oder 2, wobei die mindestens eine Reihe von Konfigurationsdaten oder -anweisungen (cfg'), die der Kennung der zweiten zentralen Steuereinheit (U) zugewiesen ist, mindestens ein Konfigurationsdatum oder - anweisung einer Sende- und/oder Empfangsadresse umfasst, die durch eine Kommunikationsschnittstelle einer Heimautomatisierungsvorrichtung (D) verwendet wird, die einer zentralen Steuereinheit (U1') der Heimautomatisierungsanlage (Su) angeschlossen ist.

4. Verfahren nach einem der Ansprüche 1 bis 3, weiter die folgenden Schritte umfassend:

   - Empfangen einer Austauschanfrage (ERSvc3) in Bezug auf eine Kennung (U1ID) der ersten zentralen Steuereinheit (U1) und eine Kennung (U1'ID) der zweiten zentralen Steuereinheit (U1');
   - Speichern (ERSvc5) in einem Konfigurationsbezugssystem (Rf) einer Zuweisung zwischen der ersten zentralen Steuereinheit (U1) und deren Kennung (U1ID) einerseits, und der zweiten zentralen Steuereinheit (U1') oder deren Kennung (U1'ID) andererseits;

5. Verfahren nach einem der Ansprüche 1 bis 4, wobei der Schritt des Bestimmens (ERSvc10) mindestens einer Reihe von Konfigurationsdaten oder - anweisungen (cfg'), die der Kennung (U1'ID) der zweiten zentralen Steuereinheit (U) zugewiesen ist, aus mindestens einer Reihe von Konfigurationsdaten oder - anweisungen (cfg), die der eindeutigen Kennung (U1ID) der ersten zentralen Steuereinheit (U1) zugewiesen ist, mindestens eine Teilkopie der mindestens einen Reihe von Konfigurationsdaten oder -anweisungen, die der Kennung der ersten zentralen Steuereinheit (cfg) zugewiesen ist, umfasst.

6. Verfahren nach einem der Ansprüche 1 bis 5, wobei der Schritt des Bestimmens (ERSvc10) mindestens einer Reihe von Konfigurationsdaten oder - anweisungen (cfg'), die der Kennung (U1'ID) der zweiten zentralen Steuereinheit (U) zugewiesen ist, aus mindestens einer Reihe von Konfigurationsdaten oder - anweisungen (cfg), die der eindeutigen Kennung der ersten zentralen Steuereinheit (U1) zugewiesen ist, eine Formatänderung der Konfigurationsdaten oder -anweisungen (cfg) oder eine Änderung einer Struktur der Konfigurationsdaten oder -anweisungen (cfg) umfasst.

7. Verfahren nach einem der Ansprüche 1 bis 6, wobei der Schritt des Bestimmens (ERSvc10) mindestens einer Reihe von Konfigurationsdaten oder - anweisungen (cfg'), die der Kennung (U1'ID) der zweiten zentralen Steuereinheit (U) zugewiesen ist, aus mindestens einer Reihe von Konfigurationsdaten oder - anweisungen (cfg), die der eindeutigen Kennung (U1ID) der ersten zentralen Steuereinheit (U1) zugewiesen ist, eine Anpassung der Konfigurationsdaten oder -anweisungen (cfg) umfasst.

8. Verfahren nach einem der Ansprüche 4 bis 7, weiter den folgenden Schritt umfassend:

- Speichern (ERSvc9) der mindestens einen Reihe von Konfigurationsdaten oder -anweisungen (cfg), die der Kennung (U1'ID) der zweiten zentralen Steuereinheit (U1') zugewiesen ist, in dem Konfigurationsbezugssystem (Rf).

9. Verfahren nach Anspruch 8, weiter den folgenden Schritt umfassend:

- Aktualisieren (ERSvc9) des Konfigurationsbezugssystems derart, um den tatsächlichen Austausch der ersten zentralen Steuereinheit (U1) durch die zweite zentrale Steuereinheit (U1') zu speichern.

10. Verfahren nach Anspruch 4, weiter die folgenden Schritte umfassend:

- Überprüfen (ERSvc4) der Verfügbarkeit der eindeutigen Kennung (U1'ID) der zweiten zentralen Steuereinheit (U1') bei dem Konfigurationsbezugssystem (Rf);

Wobei der Schritt des Überprüfens vor dem Speichern der Austauschanfrage erfolgt.

11. Verfahren zur Konfiguration einer zentralen Steuereinheit (U1), die einer Heimautomatisierungsanlage (Su) oder einer Heimautomatisierungsvorrichtung (D) angehört, umfassend eine zentrale Steuereinheit (U1), und einer Heimautomatisierungsanlage (Su) angehörend, im Rahmen des Austausches einer vorherigen zentralen Steuereinheit (U1), wobei das Verfahren durch die zentrale Steuereinheit (U1') umgesetzt wird, und die folgenden Schritte umfasst:

- Erhalten (ERU1'6) einer Lokalisierungskennung (SvcL) eines Konfigurationsdienstes (Svc);
- Senden (ERU1'7) einer Konfigurationsanfrage (MConn) an den Konfigurationsdienst (Svc) unter Verwendung der Lokalisierungskennung (Svc1) und in Verbindung mit einer Kennung der zentralen Steuereinheit (U);
- Empfangen (ERU1'11) mindestens einer Reihe von Konfigurationsdaten oder-anweisungen (cfg') von dem ersten Fernkonfigurationsdienst (Svc), die von der Konfiguration der vorherigen zentralen Steuereinheit (U1) abgeleitet wird;
- Konfigurieren (ECfU1'12) der zentralen Steuereinheit (U1') auf der Basis der mindestens einen Reihe von Konfigurationsdaten oder -anweisungen (cfg');

12. Verfahren nach Anspruch 11, wobei der Konfigurationsschritt eine Konfiguration mindestens einer Adresse $(A_{P_1}^{1'}, A_{P_2}^{1'})$ zum Senden und/oder Empfangen der zentralen Steuereinheit (U1') umfasst, die für eine Kommunikationsschnittstelle (2') mit einer Heimautomatisierungsvorrichtung (D) der Heimautomatisierungsanlage (Su) verwendet wird, wobei die Konfiguration auf Basis mindestens eines Wertes einer Sende- und/oder Empfangsadresse ausgeführt wird, der in der mindestens einen Reihe von Konfigurationsdaten oder -anweisungen (cfg') liegt.

13. Verfahren nach einem der Ansprüche 11 oder 12, wobei der Konfigurationsschritt das Senden einer Befehlsnachricht (MCfgD) an mindestens eine Heimautomatisierungsvorrichtung (D) in Hinblick auf die Änderung einer Sende- und/oder Empfangsadresse umfasst, die durch eine Kommunikationsschnittstelle der Heimautomatisierungsvorrichtung (D) mit der zentralen Steuereinheit (U1') der Heimautomatisierungsanlage (Su) verwendet wird, auf Basis mindestens eines Wertes einer Sende- und/oder Empfangsadresse der in der mindestens einen Reihe von Konfigurationsdaten oder -anweisungen (cfg') liegt.

## Claims

1. A method for configuring a second central control unit (U1') belonging to a home automation installation (Su), as part of the replacement of a first central control unit (U1), the method being implemented by a first configuration remote access service (Svc1c) executed by a management unit (Sv1) and comprising the following steps:

   - Recording (ERSvc1) of at least one set of configuration instructions or data (cfg) associated with a unique identifier of a first central control unit (U1).
   - Receiving (ERSvc7) a configuration request (MCfgRq) in connection with an identifier of a second central control unit (U1');
   - Determining (ERScv8) an association between the second central control unit (U1') or its identifier (U1'ID) on the one hand and the first central control unit (U1) or its identifier (U1ID) on the other hand;
   - Determining (ERSvc10, ERSvc5) at least one set of configuration instructions or data (cfg') associated with the identifier of the second central control unit (U1') from the at least one set of configuration instructions or data (cfg) associated with the unique identifier of the first central control unit (U1);
   - Transmitting (ERSvc11) at least one configuration message (MCfg) comprising the at least one set of configuration instructions or data (cfg') associated with the identifier of the second central control unit (U1') for the second central control unit (U1');

2. The method according to claim 1, wherein the at least one set of configuration instructions or data (cfg') associated with the identifier of the second central control unit (U) comprises at least one configuration instruction or data of at least one transmission and/or reception address $\left(A_{P_1}^{1'}, \ A_{P_2}^{1'}\right)$ of the second central control unit (U1') used for a communication interface (2') with a home automation device (D) of the home automation system (Su).

3. The method according to any of claims 1 or 2, wherein the at least one set of configuration instructions or data (cfg') associated with the identifier of the second central control unit (U) comprises at least one configuration instructions or data of a transmission and/or reception address used by a communication interface of a home automation device (D) attached to the central control unit (U1') of the home automation system (Su).

4. The method according to any of claims 1 to 3, further comprising the following steps:

   - Receiving a replacement request (ERSvc3) in relation with an identifier (U1ID) of the first central control unit (U1) and an identifier (U1'ID) of the second central control unit (U1');
   - Recording (ERSvc5) in a configuration repository (Rf) of an association between the first central control unit (U1) or its identifier (U1ID) on the one hand and the second central control unit (U1') or its identifier (U1'ID) on the other hand;

5. The method according to any of claims 1 to 4, wherein the step of determining (ERSvc10) of at least one set of configuration instructions or data (cfg') associated with the identifier (U1'ID ) of the second central control unit (U) from the at least one set of configuration instructions or data (cfg) associated with the unique identifier (U1ID) of the first central control unit (U1) comprises an at least partial copy of the at least one set of configuration instructions or data associated with the identifier of the first central control unit (cfg).

6. The method according to any of claims 1 to 5, wherein the step of determining (ERSvc10) of at least one set of configuration instructions or data (cfg') associated with the identifier (U1'ID) of the second central control unit (U) from the at least one set of configuration instructions or data (cfg) associated with the unique identifier of the first central control unit (U1) comprises a modification of the format of the configuration instructions or data (cfg) or a modification of a structure of the configuration instructions or data (cfg).

7. The method according to any of claims 1 to 6, wherein the step of determining (ERSvc10) at least one set of configuration instructions or data (cfg') associated with the identifier (U1'ID) of the second central control unit (U) from the at least one set of configuration instructions or data (cfg) associated with the unique identifier (U1ID) of the first central control unit (U1) comprises an adaptation of configuration instructions or data (cfg).

8. The method according to any of claims 4 to 7, further comprising the following step:

- Recording (ERSvc9) at least one set of configuration instructions or data (cfg) associated with the identifier (U1'ID) of the second central control unit (U1') in the configuration repository (RF);

9. The method according to claim 8, further comprising the following step:

- Updating (ERSvc9) the configuration repository so as to record the effective replacement of the first central control unit (U1) by the second central control unit (U1').

10. The method according to claim 4, further comprising the following steps:

- Verifying (ERSvc4) the availability of the unique identifier (U1'ID) of the second central control unit (U1') with the configuration repository (Rf);

The verification step is prior to the registration of the replacement request.

11. The Method for configuring a central control unit (U1) belonging to a home automation installation (Su) or a home automation device (D) comprising a central control unit (U1) and belonging to a home automation installation (Su), as part of the replacement of a previous central control unit (U1), the method being implemented by the central control unit (U1') and comprising the following steps:

- Obtaining (ERU1'6) a location identifier (SvcL) of a configuration service (Svc);
- Transmitting (ERU1'7) a configuration request (MConn) to the configuration service (Svc) using the location identifier (Svc1) and in connection with an identifier of the central control unit (U);
- Receiving (ERU1'11) of at least one set of configuration instructions or data (cfg') originating from the first remote configuration service (Svc) derived from the configuration of the previous central control unit (U1);
- Configuring (ECfU1'12) of the central control unit (U1') on the basis of the at least one set of configuration instructions or data (cfg');

12. The method according to claim 11, wherein the configuration step comprises a configuration of at least one transmission and/or reception address $\left(A_{P_1}^{1'}, \ A_{P_2}^{1'}\right)$ of the central control unit (U1') used for a communication interface (2') with a home automation device (D) of the home automation installation (Su), the configuration being carried out on the basis of at least one transmission and/or reception address value comprised in the at least one set of configuration instructions or data (cfg').

13. The method according to any of claims 11 or 12, wherein the configuration step comprises a transmission of a control message (MCfgD) to at least one home automation device (D) with a view to modify a transmission and/or reception address used by a communication interface of the home automation device (D) with the central control unit (U1') of the home automation installation (Su), on the basis of at least one transmission and/or reception address value comprised in the at least one set of configuration instructions or data (cfg').

**Fig. 1**

EP 3 639 483 B1

Fig. 2

**Fig. 3**

**Fig. 4**

## RÉFÉRENCES CITÉES DANS LA DESCRIPTION

**Documents brevets cités dans la description**

- US 2010257584 A